# EUROPEAN PATENT APPLICATION

(11) **EP 2 711 862 A1**
(43) Date of publication of application: **26.03.2014**
(21) Application number: 12184976.4
(22) Date of filing: 19.09.2012
(51) Int. Cl.: G06F 21/72, G06F 21/74

(54) **Storing data in a memory of an electronic device**

(71) Applicant: ST-Ericsson SA, 1228 Plan-les-Ouates (CH)
(72) Inventor: Loreskar, Chris, Cambridge, CB5 8HG (GB); Wiklander, Jens, 255 92 Helsingborg (SE)
(74) Representative: Zacco Denmark A/S

(57) **Abstract**

Data, such as usage restriction data (3), are stored in a memory (2) of an electronic device (1). When new data (3) is determined, a number of previously stored random data files (4) are transferred to a secure execution environment (7), in which a number of further random data files and a random seed are generated. A series for selecting some previously stored data files and some further data files is created, and a checksum over the selected files is calculated. The random seed is stored with the data, and an authentication code thereof is calculated using the checksum. The updated data and the generated further data files are returned from said secure execution environment (7), and the further data files replace a corresponding number of the previously stored data files according to the created series. The updated data is stored in the memory (2).

## Description

### Technical Field

The invention relates to storing data in a memory of an electronic device, such as SIM Lock settings in a mobile phone.

### Background

In many electronic devices data need to be stored securely on a medium or in a memory of the device. Thus replay attacks on previous versions of such data should be prevented or mitigated. Such data could be software versions, system settings, usage restriction data, etc.

Thus many electronic devices have usage restriction data stored in a memory of the device, so that the usage of the device is defined or restricted by these data. One example of such an electronic device is a mobile telephone, which may be restricted to use only one or a specified group of Subscriber Identity Module (SIM) or Universal Subscriber Identity Module (USIM) cards.

For end-users who do not want to pay the full price for a new mobile phone, a subsided version from an operator exists as an alternative. The subsided mobile phone is typically locked to that operator's network for a limited time (ranging from 6 to 24 months) during which the mobile phone cannot be used to perform calls using other SIM/USIM cards than the one approved by the operator in question. This procedure denoted SIMLock is defined in the 3GPP TS 22.022 specification, Personalization of Mobile Equipment (ME); Mobile functionality specification.

One way to protect the SIMLock settings (and state) is to also store a chip-unique Message Authentication Code (MAC) of the file contents along with the file when storing it on persistent storage. Every time the file is accessed a MAC of the file is calculated and compared to the stored MAC, and if they are not equal the data is considered tampered and the appropriate action is taken. If the MAC comparison succeeds, the data is used when validating the currently inserted SIM/USIM.

The SIMLock setting stored in the mobile phone may change over time and may be re-programmed numerous times during the lifetime of the device.

The mobile phone typically stores these SIMLock settings (and state) on persistent storage utilizing flash memories. Given the nature of flash memories, which suffer from wearing issues, a countermeasure is to perform wear-levelling on the memory. This technique attempts to evenly spread the writing of data to the memory so that no erase block is written more often than any other one which could cause premature failure for that particular erase block with respect to the number of erase cycles of the flash memory.

Traditionally whenever a file is deleted from a file system the file contents will continue to physically reside intact in the persistent storage whilst the metadata associated with the file will be deleted. This implies that the data still exists even after deletion. If the file was modified rather than deleted, the original space that the file contents occupied will remain intact and a new copy with the modified changes will be stored in another location.

Combining wear-levelling with the fact that deleted or modified files have a copy also residing unaffected in the persistent storage, old files containing SIMLock settings (or states) could possibly be retrieved. If an old copy (previously deleted or modified) of the SIMLock settings was recovered it would still qualify as a correctly MACed file in all respects. The application responsible for verifying the SIMLock settings towards the currently inserted SIM/USIM could not distinguish it from the current (correct) one because no information in the file reveals this.

To solve this shortcoming, an anti-rollback solution using OTP (One Time Programmable memory) could be used. Every time the SIMLock settings (or state) are updated, a counter is updated in the OTP and the result is included with the SIMLock settings (and state) and protected by a chip-unique MAC.

When updating a counter in OTP, a bit is flipped each time. This means that a 16 bit word in OTP can be bit-flipped (or "incremented") 16 times. After that the counter is exhausted and cannot be modified anymore. The counter will hence be stuck in the latest version without any possibility to further update it. When attempting to retrieve an old version of the SIMLock settings (or state), the counter associated with it would not match the counter stored in OTP and the security check would fail and replaying an old version would thus also fail.

If the mobile phone that should store the SIMLock settings (or state) lacks an OTP that can be programmed after production, the mobile phone is prone to replay attacks of old copies of the SIMLock settings (or state). Furthermore, since OTP is one-time writable, there are a finite number of times that the counter could be updated until it is exhausted. When such a state has been reached, there is no way to further increment the counter, and the mobile phone will be stuck with that specific version.

Another way of solving the problem is to use RPMB, (Replay Protected Memory Block). Certain eMMC flash memories contains a RPMB partition that allows writing data to it (with a special key) and the data cannot be altered without the knowledge of that key. The data is also protected against replay attacks; hence an old SIMLock setting (or state) would not be possible to replay if attempted. eMMC memories with RPMB support are more expensive than traditional NAND (or NOR) memories and are not always available when manufacturing low cost devices (USB-dongle modems for instance).

### Summary

Therefore, it is an object of embodiments of the invention to provide a method that prevents or reduces the risk of rollback of old cryptographically correct data without using special storage hardware.

According to embodiments of the invention the object is achieved in a method of storing data in a memory of an electronic device, comprising the steps of determining a new version of said data; reading a number of previously stored data files in said memory, each of said previously stored data files comprising random data of random length; transferring said previously stored data files and said determined version of said data to a secure execution environment; performing in said secure execution environment the following steps: generating a number of further data files comprising random data of random length; deriving a random seed; creating from said derived random seed in a pseudo-random number generator a series for selecting some of said previously stored data files and some of said generated further data files; calculating a checksum over the selected data files; updating said version of said data by storing said derived random seed as a part of the data; and calculating an authentication code of the updated version of said data using said calculated checksum; returning from said secure execution environment said updated version of said data and said generated further data files; renaming said generated further data files and letting them replace a corresponding number of said previously stored data files according to said created series; and storing said updated version of said data in said memory.

By calculating the authentication code in a secure execution environment based on random data files partly generated in the secure execution environment it becomes very hard for an adversary to know in which way the authentication code of the random data files should be calculated, and to try every possible combination becomes too costly in terms of time. The smart thing here is that the series of file names of new and original data files to be selected for calculation of the checksum never leaves the secure world, hence an attacker does not know in which way to use the random data files to create the authentication code protecting the data. Thus the idea is not necessarily to make it impossible to replay an old data version, rather to render brute force attempts pointless. The data to be stored in the memory and protected from replay attacks can be considered as information data or utility data, such as software versions, system settings, usage restriction data, etc., while the random data of the previously stored data files and the further data files are generated during the process of storing the information data. The secure execution environment is an execution environment that has a higher degree of security than the rest of the system. The secure execution environment may be realized with TrustZone technology, a dedicated CPU, or some other means. The checksum may be calculated e.g. as a cryptographically secure hash or a MAC.

In comparison to OTP, this solution is equally good in terms of security as outlined below and actually has some benefits beyond an OTP implementation. The OTP solution will ultimately be exhausted as the OTP bits are all flipped. As a consequence OTP can only support a finite number of updates, whereas the proposed solution has no such limitation.

Rather than using persistent storage such as eMMC with RPMB or SATA memories, the solution is independent of the storage facility utilized, hence can be used when manufacturing products utilizing cheap NOR/NAND memories or even hard drives. If a flashless based modem is designed (which uses an external host for storage), protection by SATA or eMMC with RBMP cannot be used as there is no way to connect the modem to the storage facility on the external host (as how RBMP is designed). So, even if the host contains an eMMC flash with RBMP it cannot be utilized for deterring replay attacks of the SIMLock settings. As a consequence the modem can only utilize the proposed solution to protect the SIMLock settings against replay attacks.

In one embodiment the method further comprises the steps of storing, when said updated version of said data and said generated further data files has been returned from said secure execution environment, at least said generated further data files in said memory; transferring said previously stored data files, said generated further data files and said updated version of said data to the secure execution environment; performing in said secure execution environment the following steps: retrieving the random seed; recreating from the random seed the series for selecting some of said previously stored data files and some of said generated further data files; re-calculating the checksum over the selected data files; re-calculating the authentication code of the updated version of said data using said calculated checksum; and verifying by comparing the re-calculated authentication code with the previously calculated authentication code the authenticity of the updated version of said data; and returning, if the authenticity is verified, from said secure execution environment a list of how to rename and replace data files in said memory. By thus verifying the authenticity of the updated version of the data in the secure execution environment before the random data files are renamed and replaced in the memory the security is further improved.

The steps performed in said secure execution environment may be performed in a trusted application of the application performing the other steps. Alternatively, the steps performed in the secure execution environment may be performed in a hardware block. A trusted application is a trusted application that can be executed in the secure execution environment.

In one embodiment, the method further comprises the step of repeating, when a new version of said usage restriction data has been determined, the steps performed in said secure execution environment a number of times. In this way the possibilities of replaying an old version of the data is further reduced.

In one embodiment, the number of random data files previously stored in said memory is 20 and the number of generated further random data files is 10.

The data to be stored may be usage restriction data, such as SIM Lock settings in a mobile phone.

Some embodiments of the invention also relate to an electronic device comprising a secure execution environment and a memory for storing data, the device being configured to determine a new version of said data; read a number of previously stored data files in said memory, each of said previously stored data files comprising random data of random length; transfer said previously stored data files and said determined version of said data to the secure execution environment; perform in said secure execution environment the following steps: generating a number of further data files comprising random data of random length; deriving a random seed; creating from said derived random seed in a pseudo-random number generator a series for selecting some of said previously stored data files and some of said generated further data files; calculating a checksum over the selected data files; updating said version of said data by storing said derived random seed as a part of the data; calculating an authentication code of the updated version of said data using said calculated checksum; and returning from said secure execution environment said updated version of said data and said generated further data files; rename said generated further data files and let them replace a corresponding number of said previously stored data files according to said created series; and store said updated version of said data in said memory. When the authentication code is calculated in a secure execution environment based on random data files partly generated in the secure execution environment it becomes very hard for an adversary to know in which way the authentication code of the random data files should be calculated, and to try every possible combination becomes too costly in terms of time.

Embodiments corresponding to those mentioned above for the method also apply for the electronic device.

Some embodiments of the invention relate to a computer program and a computer readable medium with program code means for performing the method described above.

### Brief Description of the Drawings

Embodiments of the invention will now be described more fully below with reference to the drawings, in which
Figure 1 shows a block diagram of an electronic device comprising a secure execution environment and a memory for storing usage restriction data;
Figures 2a and 2b show a flow chart illustrating a method of storing usage restriction data in the device of Figure 1;
Figure 3 shows a flow chart illustrating further steps performed in the method illustrated in Figures 2a and 2b;
Figure 4 shows additional data files and a SIMLock setting stored in the memory of the device shown in Figure 1;
Figure 5 shows an example of a list defining how to rename/remove additional data files;
Figure 6 shows how additional data files are renamed/removed in the memory of the device shown in Figure 1; and
Figure 7 illustrates the information flow between the units of the device shown in Figure 1.

### Detailed Description

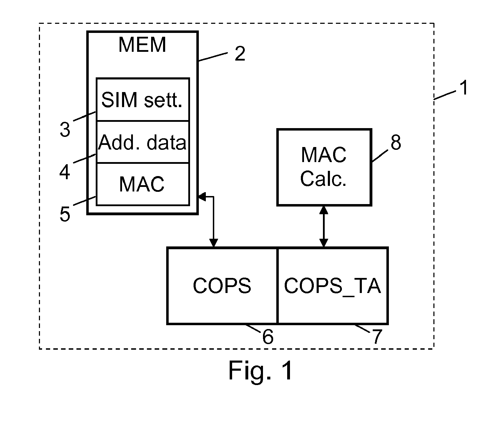

Figure 1 shows a block diagram of an electronic device 1 in which some embodiments of the invention may be implemented. In the embodiment described below the electronic device 1 is a telecommunications device, such as a mobile terminal for use in a cellular network. The mobile terminal 1 has or is connected to a (not shown) Subscriber Identity Module (SIM) or Universal Subscriber Identity Module (USIM) card, i.e. an integrated circuit that securely stores an International Mobile Subscriber Identity (IMSI) and a related key used to identify and authenticate subscribers on mobile telephony devices. The mobile terminal may be locked by a procedure denoted SIM Lock to one or more SIM/USIM cards. SIM Lock is a capability built into the mobile phone by the phone manufacturer allowing network or service providers to restrict the use of the phone to specific countries and/or network providers. The phone may be locked to e.g. one specific SIM/USIM card or to a group of SIM/USIM cards approved by the operator.

It is noted that the storing of SIMLock settings in a mobile terminal only represents one embodiment of the invention. The electronic device may be any other type of electronic device, and the data to be stored can represent e.g. software versions, system settings or other types of usage restriction data.

The mobile terminal 1 comprises a memory 2, i.e. a storage in which data bases, lists, etc. may be stored. The memory 2 is typically a non-volatile or persistent memory. Stored in the memory 2 are SIMLock settings (or state) 3 that define the SIM/USIM cards that the mobile terminal 1 is locked to. In the following, the term SIMLock settings is intended to mean SIMLock settings or state.

To avoid or at least reduce the risk that the SIMLock settings are manipulated, they may be protected by also storing a chip-unique Message Authentication Code (MAC) 5, of the file contents along with the file when storing it on persistent storage. Every time the file is accessed, a MAC of the file is calculated and compared to the stored MAC, and if they are not equal the data is considered tampered and an appropriate action is taken. If the MAC comparison succeeds, the data is used when validating the currently inserted SIM/USIM card. A control unit or process 6 (here denoted COPS) in the mobile terminal 1 is responsible for verifying the SIMLock settings towards the currently inserted SIM/USIM card.

The SIMLock settings 5 stored in the mobile phone may change over time and may be re-programmed numerous times during the lifetime of the device. As mentioned above, there is a risk that deleted or modified files, i.e. previous versions of the SIMLock settings 5 including the stored MAC, could still be recovered. When a MAC is then calculated for such recovered (old) SIMLock settings, it would be equal to the (old) stored MAC, and the SIMLock settings would be accepted. A method that reduces this risk is described below. The idea is not to make it impossible to replay an old SIMLock setting, rather to render brute force attempts pointless.

When updating the SIMLock settings, an additional amount of extra data is also created. A checksum is calculated over this data and the checksum is stored along with the updated SIMLock settings in the memory 2. This may be performed a configurable amount of times.

When an adversary wants to re-create an old SIMLock setting, the additional data needs to be retrieved such that the checksum of the additional data matches the checksum stored along with the SIMLock settings. The problem for the adversary is that it is extremely hard to know in which way to calculate the checksum of the additional data, and to try every possible combination becomes too costly in terms of time. As the data is once deleted (at least from the TOC of the file system), the additional data might not even exist after some time thus rendering it impossible to replay the old SIMLock settings.

The calculation of the checksum is performed by the SIMLock responsible application 6 (COPS), but not in the normal world where Linux (or whatever operating system) is running, but in a parallel world, denoted the "Secure World", also denoted as a secure execution environment or trusted application (COPS_TA) 7. The secure execution environment is an execution environment that has a higher degree of security than the rest of the system. The secure execution environment may be realized with TrustZone technology, a dedicated CPU, or some other means. A trusted application is a trusted application that can be executed in the secure execution environment. In this world code is explicitly trusted and cannot be manipulated from the normal world. If the device lacks secure world support, it could use some hardware block to perform the same steps (or an (U)SIM). As a last resort it could perform the calculations in a separate function (potentially obfuscated) within the same application but this would not be equally secure.

The proposed solution utilizes a concept of additional data, and a checksum (hash) of the same, to accompany the SIMLock settings in order to harden the adversary's possibility to replay an old copy of the SIMLock settings. The additional data is in reality a set of files, configurable or hardcoded that contain random data of random length (content is unimportant). The additional data 4 are also stored in the memory 2.

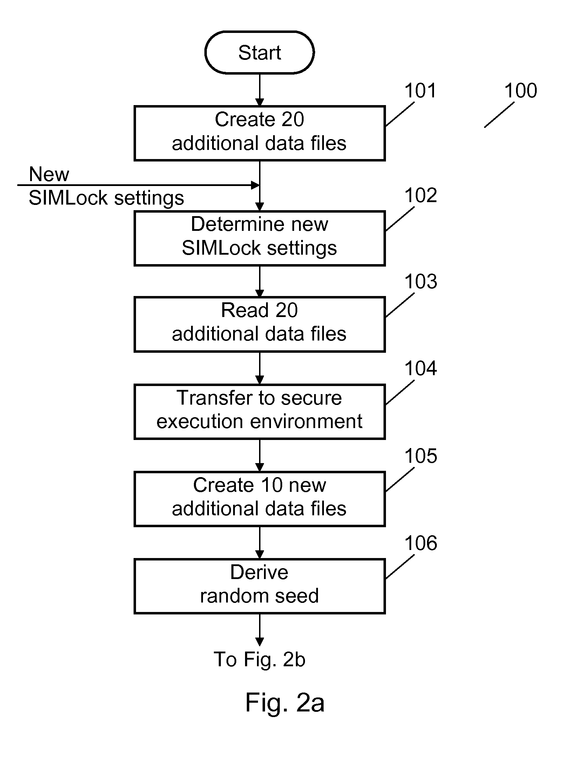

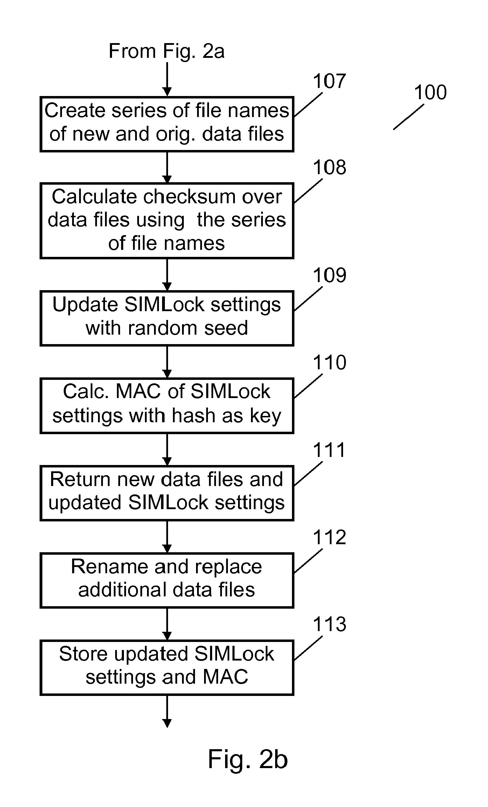

Figures 2a and 2b show a flow chart 100 illustrating the method.

The security-responsible process for verifying the SIMLock settings (COPS) 6 creates a set of files upon the first invocation in step 101. These files are created [randomly/according to some formula (could be configurable), let's assume 20]. As this is the first invocation, COPS has not written any SIMLock settings to persistent storage yet, hence only the 20 additional data files exist. Thus this step is only performed once, i.e. before the first SIMLock settings are determined.

Upon the first call to write the SIMLock settings to persistent storage 2, COPS 6 receives the new SIMLock settings in step 102, opens/reads the [randomly, according to some formula] 20 files in step 103 and passes them in step 104 to the COPS part running in the secure world (denoted COPS_TA) 7 along with the SIMLock settings.

The secure execution environment COPS_TA 7 performs the following steps:

In step 105 COPS_TA 7 generates 10 new files of random length and data (content is unimportant), named 21 - 30.

In step 106 COPS_TA 7 derives a random seed.

In step 107 COPS_TA 7 feeds this seed (concatenated with some chip unique data) into a pseudo-random number generator and creates a series of file names of the new and the original data files. This series determines in what way COPS_TA should calculate a checksum over the additional files. The series includes (typically) 10 files from the original 20 passed to COPS_TA from COPS and the 10 new files generated in step 105.

In step 108 COPS_TA calculates a checksum over the additional data files using the series of file names from step 107. The checksum may e.g. be a hash or a MAC.

In step 109 the seed derived in step 106 is stored within the SIMLock settings for future retrieval.

In step 110 the checksum from step 108 is used as a key in a chip unique MAC calculation 8 of the provided SIMLock settings, including the seed from step 106.

COPS_TA 7 then in step 111 returns to the normal world with the new 10 additional files and updated SIMLock settings.

The additional files can now be renamed and replaced in step 112 as described in detail below, and in step 113 the updated SIMLock settings can be stored in the memory 2 together with the MAC calculated in step 110.

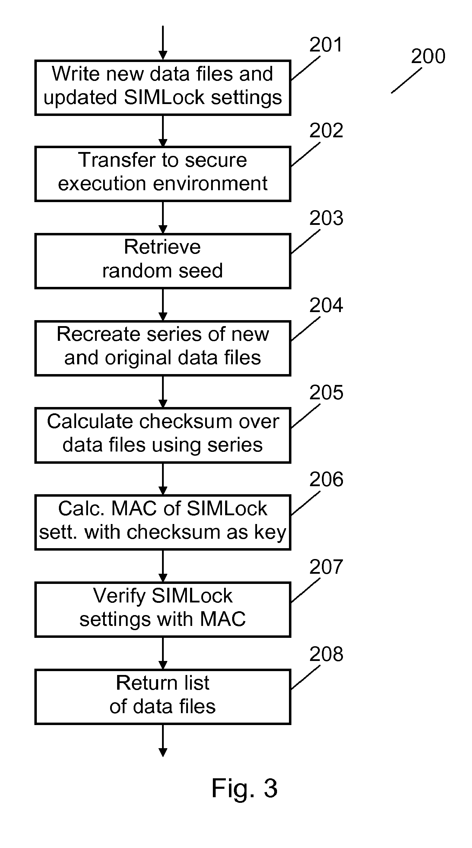

To perform these steps, a further number of steps illustrated in the flow chart 200 shown in Figure 3 can be performed.

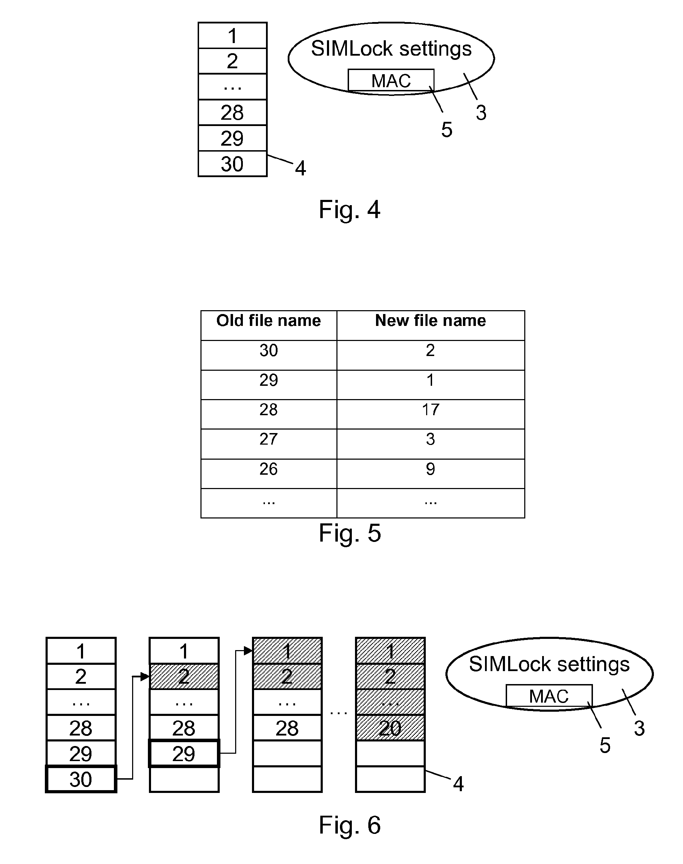

COPS 6 writes the 10 new files (21 - 30) returned from COPS_TA 7 in step 111 to persistent storage 2 along with the SIMLock settings in step 201. There now exist 30 additional files 4 and 1 SIMLock setting 3 in the memory 2, as it is illustrated in Figure 4.

COPS 6 may then immediately afterwards call COPS_TA 7 again in step 202 with all the 30 files as input and the SIMLock settings too. COPS_TA verifies the SIMLock settings by retrieving the seed (step 203) and recreating (step 204) the series of how to calculate the checksum (step 205) of the additional data files. Once done, it feeds the checksum to the chip unique MAC calculation 8 (step 206) to verify the SIMLock settings. If verified (step 207), COPS_TA uses the series of how to rename/remove the additional files (typically 10 of the original old files and 10 of the new ones just returned) and returns this list back to COPS (step 208).

An example of such a list or table is described below and illustrated in Figure 5. The additional file named 30 replaces the old (from the 20 originally generated files by COPS) file named 2. The additional file 29 replaces the old file 1 and so forth. When the 10 latest files (21 - 30) eventually are renamed to a file name between 1 and 20 there will only exist 20 files; 10 of the original files and 10 of the new files. The remaining 10 old files will be overwritten.

Thus COPS 6 starts to rename the 20 files COPS_TA 7 chose according to some scheme and implicitly removes the 10 files no longer needed. When this is finished there exist 20 additional files renamed in some way and 10 deleted ones along one set of SIMLock settings, as it is illustrated in Figure 6.

It is noted that step 101 in the procedure described above is only performed once, i.e. the first time before any SIMLock settings are received yet. The remaining steps are performed each time a new set of SIMLock settings should be determined and stored. As described below, these steps may also be repeated a number of times for each new set of SIMLock settings, which will further reduce the risk of retrieving a previous set of SIMLock settings.

If something prevents COPS 6 from finishing the renaming scheme and removal of unused additional files (battery exhaustion for instance), it will call COPS_TA 7 again. Included in the call to the secure world will be all the files that COPS 6 can read from the persistent storage 2 (with respect to additional files). COPS_TA 7 will verify the SIMLock settings (if possible) and reply with a scheme how to rename the existing files and remove those not needed. COPS can easily detect that it has previously failed to rename/delete files by counting the number of additional files present on the persistent storage; if there are more than 20 files, something failed and it needs to call COPS_TA to resume the rename/removal procedure. Deleted/renamed files will not be included when COPS calls COPS_TA and COPS_TA figures out which files already have been replaced by examining the derived series and comparing it to list of files received from COPS. Until the rename/removal procedure is finished, COPS should not accept any incoming requests as it will not be able to verify the current SIMLock settings until all the additional files have been replaced accordingly. Once done it can resume operation as normal.

When COPS 6 shall update the SIMLock settings it will call COPS_TA 7 with the 20 additional files and the soon-to-be updated SIMLock settings for instance. COPS_TA will verify the SIMLock settings, and re-perform the steps 102 - 111 described above, return to COPS which will complete the update by carrying out the rename/removal scheme too. The only time COPS behaves differently is the very first time it starts as it will need to create the 20 additional files needed before invoking COPS_TA to perform some action related to the SIMLock settings.

The routine by updating SIMLock settings could [optionally / according to some formula] be repeated any number of times, further hardening the possibility to retrieve the old additional files needed to calculate the required hash.

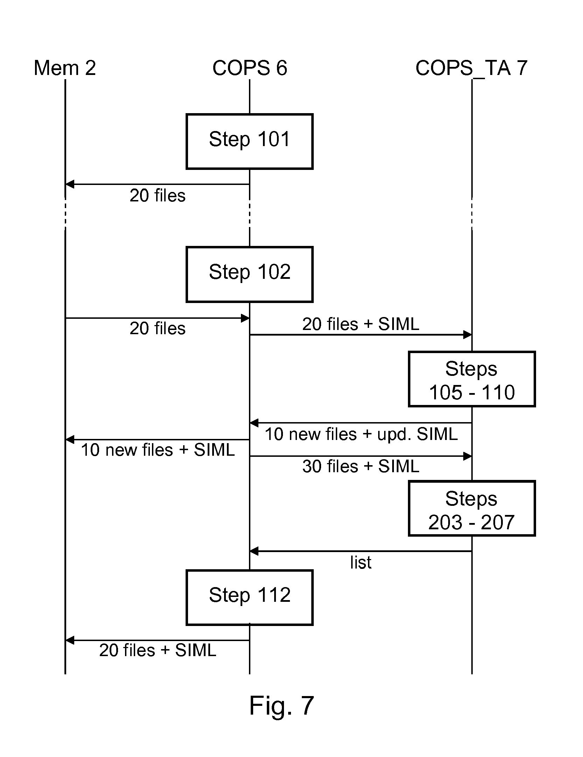

Figure 7 illustrates an example of the information flow between COPS 6, COPS_TA 7 and the memory 2. First, during initialization of the device, 20 additional data files are generated in step 101 and stored in the memory 2. When a new set of SIMLock settings is to be stored, either as the first SIMLock settings after initialization or as changed or modified SIMLock settings at a later stage, the new settings are received in step 102, the 20 stored data files are read from the memory 2, and the 20 data files together with the received SIMLock settings (in Figure 7 for short denoted as SIML) are transferred to the secure execution environment COPS_TA 7. Here, steps 105 to 110 are performed as described above, and the 10 new data files and the updated SIMLock settings are returned to COPS 6 and stored in the memory 2. COPS 6 then calls COPS_TA 7 again with all 30 data files and the SIMLock settings. The SIMLock settings are then verified by COPS_TA 7 in steps 203 to 207 and the list of how to rename files is returned to COPS 6 (provided that the SIMLock settings are verified). COPS 6 then renames and replaces data files in step 112, so that the 20 "new" data files are now stored in the memory 2. Also the updated SIMLock settings (including the calculated MAC) are stored in the memory 2.

For an adversary to replay an old SIMLock setting, the old SIMLock settings as well as the old additional files the hash was calculated over need to be found and extracted from the persistent storage. The feasibility to achieve it depends on a number of factors:
a) How much data has been written to the persistent storage since the SIMLock settings changed until the data is attempted to be recovered?
b) Does there still exist file metadata in the file system (or equivalent) pointing out the (original) locations of the additional files?
c) Can the filename associated to the original file contents be found such that the found data correlates to it?

If (c) is false, the probability of succeeding with the attack diminishes. Given that the attacker manages to locate all of the old additional files generated by COPS, every single combination of the files needs to be sought in calculating the hash to find the correct match, if the names of them are unknown or if the information about which files being used is missing. If there are 20 files created and all of these files are used as source data for the hash calculation, there will be at most P(20,20) = 2,432,902,008,176,640,000 permutations (without repetition) to test in order to find the correct order. In reality though, only half of the amount is required until the probability to find the correct match is equally large as finding an incorrect match. If a hash calculation of 20 additional files took 10⁻⁶ ms to perform, the time to hash every single combination of P(20,20) would take 1408 days (∼4 years). If only half the amount is considered it would still take 2 years.

The idea here is hence to harden the adversary's possibility to locate the old additional data files. If all additional data files are located, presenting them to COPS_TA along with correct (old) SIMLock settings would always succeed. However, each time the SIMLock settings are updated and 10 new files are created, the renaming/removal scheme is the key to harden the possibility to replay old SIMLock settings. By always using 10 old additional data files and 10 new ones, a constant re-use of old files and inferring of new ones makes it harder to find the correct series. Using 10 old files and 10 new ones is an example. However, this could be dealt with in any way chosen. Maybe the 10 new files are only partly used, or not at all, or alternatively 20 new files are created and 0 old ones reused.

If the files once deleted and once renamed lack history it becomes very hard to know which file was which connected to the previous version of the SIMLock settings. The only remaining option to test is all combinations in order to find the match that successfully allows verification of an old SIMLock setting. This could however easily be detected by COPS_TA and it could after 100 (or whatever) failed attempts to verify the SIMLock settings start to delay the verification procedure by seconds in order to prolong an exhaustive brute force attack.

This description aims to describe the core of the idea. It can however be tweaked in many ways to make it even harder to replay old SIMLock settings. It could be repeated several times in order to generate more additional files and extend the connection between a particular additional file and a particular SIMLock setting as a specific file constantly becomes substituted.

When particularly sensitive operations are performed within the SIMLock settings, typically when a lock setting changes from AutoLock (lock to the next inserted (U)SIM) to Locked to a particular (U)SIM, additional rounds of additional file creation would be valuable. The previous SIMLock settings containing the AutoLock setting enabled should be very hard to replay. Hence COPS could iterate (say 10 times) to create new additional data files connected to the new SIMLock settings where it is locked to a specific (U)SIM, making it further difficult to replay the original SIMLock settings. COPS_TA would typically be the one deciding if the desired operation about to be performed is deemed "critical" and would command COPS to repeat the rename/delete procedure as many times as configured.

Preferably, COPS_TA should give extra care to the operations deemed as specially "critical" and in those circumstances (potentially) create more additional files and iterate the procedure multiple times to create more additional data. By generating more additional data files, the likelihood of replaying an old SIMLock setting diminishes as more additional data files are created.

Although various embodiments of the present invention have been described and shown, the invention is not restricted thereto, but may also be embodied in other ways within the scope of the subject-matter defined in the following claims.

## Claims

1. A method of storing data (3) in a memory (2) of an electronic device (1), comprising the steps of:
• determining (102) a new version of said data (3);
• reading (103) a number of previously stored data files (4) in said memory (2), each of said previously stored data files (4) comprising random data of random length;
• transferring (104) said previously stored data files and said determined version of said data to a secure execution environment (7);
• performing in said secure execution environment (7) the following steps:
○ generating (105) a number of further data files comprising random data of random length;
○ deriving (106) a random seed;
○ creating (107) from said derived random seed in a pseudo-random number generator a series for selecting some of said previously stored data files and some of said generated further data files;
○ calculating (108) a checksum over the selected data files;
○ updating (109) said version of said data by storing said derived random seed as a part of the data;
○ calculating (110) an authentication code of the updated version of said data using said calculated checksum; and
○ returning (111) from said secure execution environment (7) said updated version of said data and said generated further data files;
• renaming (112) said generated further data files and letting them replace a corresponding number of said previously stored data files according to said created series; and
• storing (113) said updated version of said data in said memory (2).

2. A method according to claim 1, **characterized in that** the method further comprises the steps of:
• storing (201), when said updated version of said data and said generated further data files has been returned from said secure execution environment, at least said generated further data files in said memory;
• transferring (202) said previously stored data files, said generated further data files and said updated version of said data to the secure execution environment;
• performing in said secure execution environment the following steps:
○ retrieving (203) the random seed;
○ recreating (204) from the random seed the series for selecting some of said previously stored data files and some of said generated further data files;
○ re-calculating (205) the checksum over the selected data files;
○ re-calculating (206) the authentication code of the updated version of said data using said calculated checksum; and
○ verifying (207) by comparing the re-calculated authentication code with the previously calculated authentication code the authenticity of the updated version of said data; and
• returning (208), if the authenticity is verified, from said secure execution environment a list of how to rename and replace data files in said memory.

3. A method according to claim 1 or 2, **characterized in that** the steps performed in said secure execution environment (7) are performed in a trusted application of the application performing the other steps.

4. A method according to claim 1 or 2, **characterized in that** the steps performed in said secure execution environment (7) are performed in a hardware block.

5. A method according to any one of claims 1 to 4, **characterized in that** the method further comprises the step of:
• repeating, when a new version of said data has been determined, the steps performed in said secure execution environment a number of times.

6. A method according to any one of claims 1 to 5, **characterized in that** the number of data files previously stored in said memory is 20 and the number of generated further data files is 10.

7. A method according to any one of claims 1 to 6, **characterized in that** the data to be stored are usage restriction data (3).

8. A method according to claim 7, **characterized in that** the usage restriction data (3) are SIM Lock settings in a mobile phone.

9. An electronic device (1) comprising a secure execution environment (7) and a memory (2) for storing data (3), the device being configured to:
• determine a new version of said data (3);
• read a number of previously stored data files (4) in said memory (2), each of said previously stored data files (4) comprising random data of random length;
• transfer said previously stored data files and said determined version of said data to the secure execution environment (7);
• perform in said secure execution environment (7) the following steps:
○ generating a number of further data files comprising random data of random length;
○ deriving a random seed;
○ creating from said derived random seed in a pseudo-random number generator a series for selecting some of said previously stored data files and some of said generated further data files;
○ calculating a checksum over the selected data files;
○ updating said version of said data by storing said derived random seed as a part of the data;
○ calculating an authentication code of the updated version of said data using said calculated checksum; and
○ returning from said secure execution environment (7) said updated version of said data and said generated further data files;
• rename said generated further data files and let them replace a corresponding number of said previously stored data files according to said created series; and
• store said updated version of said data in said memory (2).

10. An electronic device according to claim 9, **characterized in that** the device is further configured to:
• store, when said updated version of said data and said generated further data files has been returned from said secure execution environment (7), at least said generated further data files in said memory (2);
• transfer said previously stored data files, said generated further data files and said updated version of said data to the secure execution environment (7);
• perform in said secure execution environment (7) the following steps:
○ retrieving the random seed;
○ recreating from the random seed the series for selecting some of said previously stored data files and some of said generated further data files;
○ re-calculating the checksum over the selected data files;
○ re-calculating the authentication code of the updated version of said data using said calculated checksum; and
○ verifying by comparing the re-calculated authentication code with the previously calculated authentication code the authenticity of the updated version of said data; and
• return, if the authenticity is verified, from said secure execution environment (7) a list of how to rename and replace data files in said memory.

11. An electronic device according to claim 9 or 10, **characterized in that** said secure execution environment (7) is a trusted application of the application performing other steps.

12. An electronic device according to claim 9 or 10, **characterized in that** said secure execution environment (7) is a hardware block.

13. An electronic device according to any one of claims 9 to 12, **characterized in that** the device is further configured to:
• repeat, when a new version of said data has been determined, the steps performed in said secure execution environment a number of times.

14. An electronic device according to any one of claims 9 to 13, **characterized in that** the number of data files previously stored in said memory is 20 and the number of generated further data files is 10.

15. An electronic device according to any one of claims 9 to 14, **characterized in that** the data to be stored are usage restriction data (3).

16. An electronic device according to claim 15, **characterized in that** the usage restriction data (3) are SIM Lock settings in a mobile phone.

17. A computer program comprising program code means for performing the steps of any one of the claims 1 to 8 when said computer program is run on a computer.

18. A computer readable medium having stored thereon program code means for performing the method of any one of the claims 1 to 8 when said program code means is run on a computer.
